# EUROPÄISCHE PATENTSCHRIFT

(11) **EP 1 076 294 B1**
(45) Veröffentlichungstag und Bekanntmachung des Hinweises auf die Patenterteilung: **10.10.2007**
(21) Anmeldenummer: 00117473.9
(22) Anmeldetag: 11.08.2000
(51) Int. Cl.: G06F 13/40, G06F 11/20

(54) **Rechnerbusbrücken**
Computer Bus Bridges
Passerelles de bus pour ordinateur

(30) Priorität: 13.08.1999 DE 19938429
(43) Veröffentlichungstag der Anmeldung: 14.02.2001
(73) Patentinhaber: FORCE COMPUTERS GMBH, D-85579 Neubiberg (DE)
(72) Erfinder: Vadasz, Istvan, 81739 München (DE)
(74) Vertreter: Baronetzky, Klaus

(56) Entgegenhaltungen:
- EP-A- 0 410 861
- WO-A-89/07349
- US-A- 4 654 784
- US-A- 5 991 844

## Beschreibung

Die Erfindung betrifft einen Computer mit einer Mehrzahl von Steckkarten, gemäß dem Oberbegriff von Anspruch 1.

Aus der Druckschrift US-A-4,654,784 ist ein System für z.B. eine digitale Telefonvermittlungsstelle bekannt, in dem jeweils paarweise vorhandene CPU-Einheiten im Master-Slaye-Betrieb arbeiten. Sowohl die Master- als auch die Slave-CPUs sind jeweils über einen Bus mit einander verbunden, an welchen jeweils auch ein Steuerprozessor, der auch paarweise als Master- und Slaveprozessoreinheit vorgesehen ist, angeschlossen ist und der die Umschaltung zwischen Master- und Slavebetrieb steuern soll. Die beiden Busse sind über zwei Koppeleinheiten mit einander verbunden.

Aus der Druckschrift WO 89/07349 A ist ein System bekannt, das über eine Verbindungseinheit den Bus der CPU eines PC-Systems mit dem Bus eines Co-Prozessors des PC-Systems verbindet, und das außerdem den Anschluss von Erweiterungskarten zulässt, wobei nur eine CPU, jedoch mehrere Co-Prozessoren auf entsprechenden Erweiterungskarten vorhanden sein können.

Es sind auch Computer mit einer Mehrzahl von Steckkarten bekannt, bei denen einander benachbarte Bussegmente vorgesehen sind, in die die Steckkarten einbringbar sind. In den Steckplätzen können beliebige Steckkarten mit der entsprechenden Busspezifikation eingesteckt werden, wobei mindestens eine Steckkarte eine CPU oder einen Rechnerbaustein aufweisen muss. Diese Steckkarte wird auch als Host bezeichnet, während die übrigen Steckkarten als Nutzsteckkarten oder Blind-Steckkarten bezeichnet werden und je nach Anwendungsfall an die unterschiedlichen Anwendungszwecke angepasst werden können.

Ein Bussystem mit zunehmender Verbreitung, das eine Weiterentwicklung des PCI-Busses darstellt, ist der sogenannte Compact-PCI-Bus. Dieser Bus weist standardmäßig 8 Steckplätze auf, so dass bei Verwendung einer CPU 7 Nutzsteckplätze verbleiben. Dies ist in manchen Anwendungsfällen zu wenig, so dass vorgeschlagen worden ist, die Busgeschwindigkeit zu reduzieren, um eine grössere Anzahl von Steckplätzen mit längeren Bussegmenten zu erzielen. Dies verringert andererseits den Durchsatz des Systems, so dass es von daher unerwünscht ist.

Es wurden bereits CPU-Einheiten entwickelt, insbesondere solche, die zwei Steckplätze belegen und je ein separates Bus-Segment bedienen, weil bei einer derartigen Konfiguration 14 Nutzsteckplätze unterstützt werden können. Diese Lösung erlaubt allerdings nicht den Hot-Swap-Betrieb und bietet auch keine Redundanz.

Bei anspruchsvolleren Anwendungen wird häufig eine besonders hohe Verfügbarkeit des Computers verlangt. Bei derartigen Anwendungen werden häufig zwei CPU-Steckkarten eingesetzt, wobei beim Ausfall einer dieser Steckkarten die andere Steckkarte die zentralen Rechnerfunktionen alleine übernimmt.

Um die hohe Verfügbarkeit und die dementsprechend große Ausfallsicherheit mit der Verfügbarkeit einer erhöhten Anzahl von Steckplätzen zu verbinden, ist es vorgeschlagen worden, eine Brückenschaltung zu realisieren, wobei gemäß diesem Vorschlag eine Brückenplatine vorgesehen ist, die auf einer gegenüber der Ebene des Motherboards oder der Backplane versetzten Ebene zwei CPU-Steckkarten mit zwei I/O-Einheiten kombiniert werden sollen, die die beiden Bussegmente überlappen sollen.

Unabhängig davon, wie die CPU-Steckkarten und die I/O-Steckkarten auf die vier Steckplätze der Tochterplatine bzw. die gegenüberliegenden Steckplätze im Motherboard verteilt werden, bestehen besondere Anforderungen an die I/O-Steckkarten, die beim Ausfall ihrer zugehörigen CPU-Steckkarten erhebliche Zusatzfunktionen übernehmen müssen. Zwar könnten beide CPU-Steckkarten auf einem Segment und die I/O-Steckkarten auf dem anderen Segment angeordnet sein, was eine weniger komplexe Implementierung bedeuten würde. Diese Lösung ist jedoch im Normalbetrieb schlechter, da nicht ohne weiteres eine gleichmäßige Auslastung beider Bussegmente realisierbar ist; zudem müssen spezielle Zusatz-Signalleitungen vorgesehen sein, die vom Standard abweichen und damit Kompatibilitätsprobleme aufweisen.

Aufgrund dieser Schwierigkeiten ist es auch vorgeschlagen worden, die beiden I/O-Steckkarten durch CPU-Steckkarten zu ersetzen, so daß dann vier CPU-Steckkarten vorliegen. Diese Lösung weist einen sehr guten Datendurchsatz auf, und auch eine gleichmäßige Lastenverteilung. Andererseits stellt sie die teuerste mögliche Realisierungsform dar.

Daher liegt der Erfindung die Aufgabe zugrunde, einen Computer mit einer Mehrzahl von Steckkarten gemäß dem Oberbegriff von Anspruch 1 zu schaffen, der eine hohe Verfügbarkeit mit einer vergrößerten Anzahl von Nutzsteckplätzen bei dennoch günstigen Kosten zu realisieren erlaubt.

Diese Aufgabe wird erfindungsgemäß durch Anspruch 1 gelöst. Vorteilhafte Weiterbildungen ergeben sich aus den Unteransprüchen.

Gemäß einem besonders günstigen Gesichtspunkt der Erfindung läßt sich durch die erfindungsgemäße feste Verbindung einer I/O-Einheit und einer CPU-Einheit eine hohe Verfügbarkeit auch dahingehend gewährleisten, daß die Kombination dieser Einheiten je auch während des Betriebs des Computers entfernt und durch eine gleichartige ersetzt werden kann. Diese Arbeitsweise wird im Jargon mit Hot Swap bezeichnet.

Um die erfindungsgemäße Konfiguration zu erreichen, werden im Motherboard/Backplane die Signalleitungen beider Bus-Segmente im Grenzbereich der beiden Bus-Segmente überlappend (interleaved) geroutet. Wenn also die Bus-Segmente "A" und "B" heißen, so sind die Konnektoren, also die Verbindungselemente für das Stecken der Steckkarten in das Motherboard, im Motherboard/Backplane nach folgendem Schema angebunden:
AAAAAAABABBBBBBB.

Bevorzugt können identische Konnektoren an allen Positionen der Bussegmente verwendet werden.

Die feste Verbindung und mechanisch gut unterstützte Schiebeführung eines derartigen Brückenglieds garantieren nicht, daß sich die Kontakte von I/O-Einheit und CPO-Einheit in der Backplane gleichzeitig lösen bzw. beim Einführen die Kontaktgabe gleichzeitig erfolgt. Die zeitliche Abfolge des Hot-Swaps eines Brückenglieds läßt sich dadurch vereinfachen, daß die Hardware-Verbindung zum Motherboard für jede Einheit individuell erfolgt. Der Anfang und das Ende des Hot-Swap-Vorgangs wird aber für das Brückenglied als Ganzes festgestellt.

Erfindungsgemäß sind zwei voneinander unabhängige Brückenglieder vorgesehen, wobei jedes Brückenglied bei Realisierung jeder I/O-Einheit bzw. CPU-Einheit als Steckkarte über eine Tochterplatine elektrisch intern verbunden ist. Die erfindungsgemäß besondere Verschaltung ist so vorgesehen, daß eine I/O-Einheit eines Brückenglieds in einem Bussegment steckt, die CPU-Einheit des gleichen Brückenglieds jedoch in dem anderen Bussegment, und die I/O-Einheit des anderen Brückenglieds mit dem einen Bussegment und die CPU-Einheit des anderen Brückenglieds mit dem anderen Bussegment verbunden ist.

Bei dieser Lösung lassen sich - auch dies stellt einen besonderen Vorteil dar - die Standardsignale und -anschlüsse des Compact-PCI-Busses verwenden. Es ist ohne weiteres möglich, separate Adressräume für jedes Bussegment zu verwenden. Jede CPU kommuniziert bei dieser Lösung mit einem Bussegment, so daß eine sehr geradlinige Realisierung möglich ist. Lediglich die Initialisierung erfolgt bei beiden CPUs unterschiedlich, nachdem eine CPU mit dem zugehörigen Bussegment über eine I/O-Einheit, und die andere CPU direkt mit dem zugehörigen Bus-segment verbunden ist. Diese Lösung erlaubt immerhin 12 Nutzsteckplätze, zwei CPU-Steckkarten, wobei Hot Swap möglich ist, obwohl die Signalverwendung der Busleitungen nicht vom Standard abweicht.

Die Brückenglieder vermitteln - zusätzlich zum lokalen Systembus - die notwendigen Signale und stellen ggf. die Energieversorgung sicher, um einen Hot-Swap des Verbundes aus CPU-Einheit und der I/O-Einheit (Brückenglied) zu ermöglichen. Dabei wird durch diese Verbindungen garantiert, daß die interne Stromversorgung des Verbundes erst dann eingeschaltet wird, wenn beide Komponenten vollständig eingesteckt worden sind. In einer besonderen Ausführungsform kann der durch voreilende Pins verfügbare Strom durch die Brückenschaltung der anderen Einheit zur Verfügung gestellt werden.

Die CPU-Steckkarte und die I/O-Steckkarte, welche über den lokalen Bus oder die Brückenschaltung verbunden sind, bilden eine Struktureinheit oder ein Brückenglied. Die Verbindungen zu den beiden Bus-Segmenten können gleichartig aufgebaut sein und symmetrisch erscheinen. In dem typischen Anwendungsfall wird die "Host"-Funktionalität auf beiden Bus-Segmenten von der jeweils kontaktierten Karte desselben Brückenglieds bereitgestellt. Dadurch wird es möglich, das andere (inaktive) Brückenglied von beiden Bus-Segmenten zu entfernen.

Wenn die Host-Konfiguration umgestellt wird, also die bisherigen Rollen der Brückenglieder als Host und Nicht-Host vertauscht werden, so erfolgt dies auf beiden Bus-Segmenten gleichzeitig. Diese Konfiguration erlaubt, daß das Brückenglied, welches als Nicht-Host (Sekundär-Host) konfiguriert ist, aus dem System per Hot-Swap entfernt werden kann. Ein per Hot-Swap eingestecktes Brückenglied wird für beide Bus-Segmente als Nicht-Host (Sekundär-Host) voreingestellt.

Bei einer besonderen Ausführungsform ist es vorgesehen, daß in einer besonderen Betriebsart jedes Brückenglied für je ein Bus-Segment einen Host stellt. Um Hot-Swap zu unterstützen, wird aus dieser Betriebsart in die oben beschriebene Betriebsart und Konfiguration umgeschaltet.

Weitere Einzelheiten, Vorteile und Merkmale ergeben sich aus der nachfolgenden Beschreibung eines Ausführungsbeispiels anhand der Zeichnungen.

Es zeigern:
- Fig. 1: eine schematische Darstellung einer Ausführungsform eines für die Erfindung beispielhaften Computers; und
- Fig. 2: den schematische Aufbau eines Brückenglieds zur Verwendung in einem für die Erfindung beispielhaften Computer.

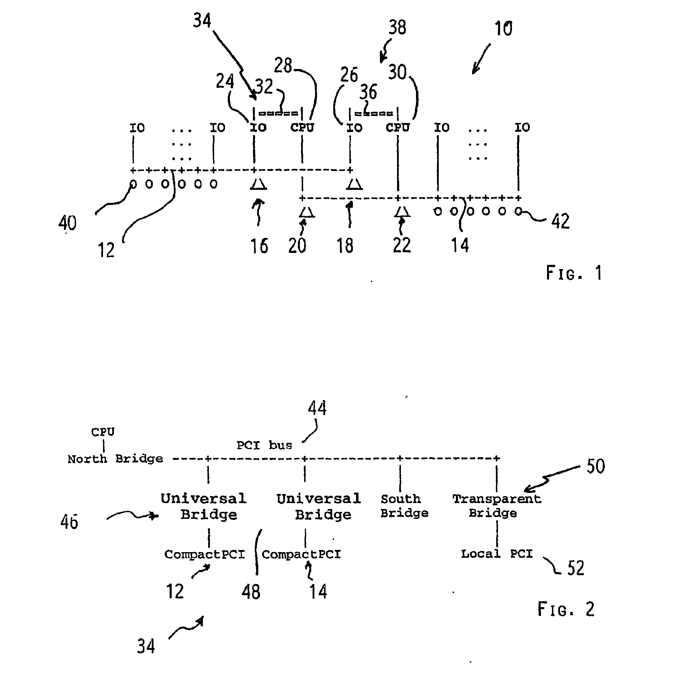

Der in Fig. 1 schematisch dargestellte Computer 10 weist zwei einander benachbarte Bussegmente 12 und 14 auf, wobei jedes Bussegment acht Steckplätze aufweist. Auch wenn in der Darstellung gemäß Fig.1 beide Bussegmente in unterschiedlichen Höhen dargestellt sind, versteht es sich, daß in der Praxis die Realisierung auf einer Höhe innerhalb einer gemeinsamen Backplane bevorzugt ist. Die Backplane ist in Multilayer-Technik ausgebildet, so daß die Signalleitungen insofern tatsächlich auf unterschiedlichen Höhen, allerdings innerhalb der gleichen Platine, realisiert sind.

Das Bussegment 12 weist zwei Steckplätze 16 und 18 auf; die dem Bussegment 14 benachbart sind. In entsprechender Weise weist das Bussegment 14 zwei Steckplätze 20 und 22 auf, die dem Bussegment 12 benachbart sind. Hierbei ist der Steckplatz 16, betrachtet von dem Bussegment 12 aus gesehen, diesseits des Steckplatzes 20 angeordnet, der Steckplatz 18 jedoch jenseits. Aus Sicht des Bussegments 14 ist der Steckplatz 22 diesseits, der Steckplatz 20 hingegen jenseits des Steckplatzes 18 des anderen Bussegmentes angeordnet.

Die beiden Steckplätze 16 und 18 sind für das Einstecken von I/O-Einheiten 24 und 26 bestimmt. Demgegenüber sind die Steckplätze 20 und 22 für das Einstecken von zwei CPU-Einheiten 28 und 30 bestimmt. Die I/O-Einheit 24 bildet zusammen mit einer Brückenschaltung 32 und der CPU-Einheit 28 das Brückenglied 34. Demgegenüber bildet die I/O-Einheit 26 zusammen mit einer Brückenschaltung 36 und der CPU-Einheit 30 das andere Brückenglied 38. Beide Brückenglieder 34 und 38 sind zueinander gleich aufgebaut, so daß sie im Grunde austauschbar sind und damit die Realisierung vereinfacht ist. Die Brückenschaltungen 32 und 36 bieten eine sowohl mechanisch als auch eletrisch feste Verbindung, wobei zusätzlich durch entsprechende seitliche Gleitführungen und interne, hier nicht dargestellte Verschraubungen zwischen I/O-Einheit und CPU-Einheit dafür Sorge getragen ist, daß jedes Brückenglied 34 und 38 als kompakte Einheit gemeinsam in die beiden je vorgesehenen Steckplätze einsteckbar und aus diesen entfernbar ist.

Ferner weist jedes Bussegment 12 und 14 je sechs Nutzsteckplätze 40 bzw. 42 auf. In diese Steckplätze lassen sich beliebige weitere Steckkarten je nach Anwendungsfall einstecken.

Aus Fig. 2 ist der innere Aufbau eines Brückenglieds 34 schematisch ersichtlich. Über die Brückenschaltung 32 ist ein interner PCI-Bus 44 zur Verfügung gestellt, der über Standardschaltkreise, die im Jargon als North Bridge und South Bridge bezeichnet werden, die Verbindung zur CPU bzw. zu der I/O-Einheit realisiert. Über kundenspezifische programmierbare Schaltkreise oder einen ASIC 46 und 48 ist die Realisierung des Anschlusses an die Bussegmente 12 und 14 realisiert. Das eingesetzte Bus-Interface muß sinngemäß als Host und als Nicht-Host konfigurierbar sein. Beide Bus-Segmente sind nach der Spezifikation des CompactPCI-Busses ausgebildet.

Ferner weist das Brückenglied 34 bevorzugt noch eine transparente Brücke 50 zu einem lokalten PCI-Bus 52 auf, der zusätzlich bereitgestellt wird. Es versteht sich, daß in einer modifizierten Ausgestaltung diese transparente Brücke und der lokale PCI-Bus auch entfallen können.

Auch wenn das dargestellte Ausführungsbeispiel die Realisierung der I/O-Einheit und der CPU-Einheit je auf einer Steckkarte darstellt, versteht es sich, daß eine andere Ausbildung ebenfalls möglich ist. Beispielsweise ist es denkbar, ein Brückenglied 34 als Kompaktlösung beispielsweise auch zu vergießen, wobei lediglich gegebenenfalls die erforderlichen Kühlkörper für die Schaltkreise von außen freiliegen. Bei dieser Lösung ist die mechanische Stabilität besonders gut, und in einer dem Ausführungsbeispiel entsprechenden Weise erstrecken sich Steckkontaktleisten zu den Bussegmenten 12 und 14 hin.

Vorteilhafterweise ist es vorgesehen, die Signalleitungen für die sich kreuzenden Verbindungen in der Backplane so zu verlegen, daß sich Masseflächen zwischen diesen erstrecken, über ein Übersprechen sicher zu verhindern. Die Realisierung von Masseflächen bzw. -bahnen stellt bei in Mulitlayer-Technik ausgeführten Backplanes ein übliches Verfahren dar.

## Patentansprüche

1. Computer mit einer Mehrzahl von Steckkarten, die in zwei einander benachbarte Bussegmente steckbar sind, wobei beide Bus-segmente über eine Brückenschaltung, die mindestens eine CPU-Steckkarte aufweist, miteinander verbunden sind, **dadurch gekennzeichnet, dass** zwei Brückenglieder (34, 38) vorgesehen sind, die je aus einer I/O-Einheit (24, 26) und einer CPU-Einheit (28, 30) bestehen, die miteinander fest verbunden sind, wobei die Brückenglieder in die Bussegmente (12, 14) einsteckbar sind, und die I/O-Einheiten (24, 26) in ein Bussegment (12) und die CPU-Einheiten (28, 30) in das andere Bussegment (14) einsteckbar sind, und wobei ein überlappendes Routing der Signalleitungen der Bussegmente (12, 14) das Verwenden von identischen Konnektoren insbesondere an allen Positionen ermöglicht und dass die interne Stromversorgung des Brückenglieds (34, 38) erst dann eingeschaltet ist, wenn beide Einheiten des Brückenglieds (34, 38) vollständig eingesteckt sind.

2. Computer nach Anspruch 1, **dadurch gekennzeichnet, dass** beide Bussegmente (12, 14) auf einem gemeinsamen Motherboard angeordnet sind, das insbesondere in Multilayer-Technik ausgeführt ist und dass die Einheiten je als Steckkarten ausgebildet sind.

3. Computer nach Anspruch 2, **dadurch gekennzeichnet, dass** je eine I/O-Einheit (24) und eine zugehörige CPU-Einheit (28) über einen lokalen Bus (32) oder eine Brückenschaltung miteinander verbunden sind, wobei mechanisch dafür Sorge getragen ist, dass das Einstecken der I/O-Einheit (24) und der CPU-Einheit (28) im wesentlichen synchron erfolgt.

4. Computer nach einem der vorhergehenden Ansprüche, **dadurch gekennzeichnet, daß** eine der CPU-Einheiten (28, 30) als Primär-Host des zugehörigen Bussegments (14) und eine der I/O-Einheiten (24, 26) als Primär-Host des anderen Bussegments (12) konfiguriert sind und so ein hochverfügbares oder fehlertolerantes System aufgebaut ist.

5. Computer nach einem der vorhergehenden Ansprüche, **dadurch gekennzeichnet, dass** die CPU-Einheit und die I/O-Einheit, welche ein Brückenglied (34, 38) darstellen, beide als aktiver Host oder Primär-Host des jeweils verbundenen Bussegments (12, 14) konfiguriert sind, während das andere Brückenglied (38, 34) als Nicht-Host, auch Sekundär-Host gennant, konfiguriert ist.

6. Computer nach einem der vorhergehenden Ansprüche, **dadurch gekennzeichnet, dass** jedes Bussegment (12, 14) als CompactPCI-Bus aufgebaut ist und jede I/O-Einheit (24, 26) als Eingabe/Ausgabe-Einheit über eine Brückenschaltung (32, 36) mit einer CPU-Einheit (28, 30) verbunden ist, so dass das so gebildete Brückenglied (34, 38) als Host oder Nicht-Host je ein Bussegment (12, 14) über die Standard-Schnittstelle bedienen kann.

7. Computer nach einem der vorhergehenden Ansprüche, **dadurch gekennzeichnet, dass** die Brückenglieder (34, 38) zueinander austauschbar und identisch ausgebildet sind.

8. Computer nach einem der vorhergehenden Ansprüche, **dadurch gekennzeichnet, dass** beide Brückenglieder (34, 38) auf der Vorderseite eines beide Bussegmente (12, 14) aufweisenden Motherboards oder Backplane angeordnet sind.

9. Computer nach einem der vorhergehenden Ansprüche, **dadurch gekennzeichnet, dass** an sich bekannte PCI-to-PCI-Brückenchips für die I/O-Einheiten (24, 26) verwendet sind, wobei die Busfrequenz unverändert bleibt und insbesondere nicht herabgesetzt ist.

10. Computer nach einem der vorhergehenden Ansprüche, **dadurch gekennzeichnet, dass** durch die lokale Architektur der CPU-Einheit (28, 30) eine gleichwertige Verbindung zu beiden Bussegmenten (12, 14) gewährleistet ist.

11. Computer nach einem der vorhergehenden Ansprüche, **dadurch gekennzeichnet, dass** in einer besonderen Betriebsart jedes Brückenglied (34, 38) als Host für je ein Bussegment (12, 14) arbeitet, aus welcher Betriebsart der Computer insbesondere in eine Betriebsart umschaltbar ist, in welcher ein Brückenglied als Nicht-Host arbeitet und hot-swap-fähig ist.

## Claims

1. A computer, having a plurality of plug-in cards which may be plugged into two mutually adjacent bus segments, the two bus segments being connected to one another by way of a bridge circuit which has at least one CPU plug-in card, **characterised in that** two bridge members (34, 38) are provided which each comprise an I/O unit (24, 26) and a CPU unit (28, 30) which are fixedly connected to one another, it being possible for the bridge members to be plugged into the bus segments (12, 14) and for the I/O units (24, 26) to be plugged into one bus segment (12) and the CPU units (28, 30) to be plugged into the other bus segment (14), and overlapping routing of the signal lines of the bus segments (12, 14) making it possible to use identical connectors in particular at all positions, and **in that** the internal power supply to the bridge member (34, 38) is only switched on once both units of the bridge member (34, 38) are plugged all the way in.

2. A computer according to Claim 1, **characterised in that** both bus segments (12, 14) are arranged on a common motherboard which is in particular constructed by the multilayer technique, and **in that** the units are in each case constructed as plug-in cards.

3. A computer according to Claim 2, **characterised in that** in each case one I/O unit (24) and an associated CPU unit (28) are connected to one another by way of a local bus (32) or a bridge circuit, care being taken from a mechanical point of view to ensure that the I/O unit (24) and the CPU unit (28) are plugged in substantially synchronously.

4. A computer according to one of the preceding claims, **characterised in that** one of the CPU units (28, 30) is configured as the primary host of the associated bus segment (14) and one of the I/O units (24, 26) is configured as the primary host of the other bus segment (12), and in this way a highly available or fault-tolerant system is constructed.

5. A computer according to one of the preceding claims, **characterised in that** the CPU unit and the I/O unit which form a bridge member (34, 38) are both configured as an active host or primary host of the respectively connected bus segment (12, 14), while the other bridge member (38, 34) is configured as a non-host, also called a secondary host.

6. A computer according to one of the preceding claims, **characterised in that** each bus segment (12, 14) is constructed as a CompactPCI bus and each I/O unit (24, 26) is connected, as an input/output unit, by way of a bridge circuit (32, 36) to a CPU unit (28, 30) such that the bridge member (34, 38) formed in this way can serve as a host or non-host to a respective bus segment (12, 14) by way of the standard interface.

7. A computer according to one of the preceding claims, **characterised in that** the bridge members (34, 38) are mutually exchangeable and are identical in construction.

8. A computer according to one of the preceding claims, **characterised in that** both bridge members (34, 38) are arranged on the front side of a motherboard or backplane having both bus segments (12, 14).

9. A computer according to one of the preceding claims, **characterised in that** PCI-to-PCI bridge chips which are known per se are used for the I/O units (24, 26), the bus frequency remaining unchanged and in particular not being reduced.

10. A computer according to one of the preceding claims, **characterised in that** as a result of the local architecture of the CPU units (28, 30) an equivalent connection is ensured to both bus segments (12, 14).

11. A computer according to one of the preceding claims, **characterised in that** in a particular mode of operation each bridge member (34, 38) operates as the host for a respective bus segment (12, 14), it being possible to switch the computer from this mode of operation in particular into a mode of operation in which a bridge member operates as the non-host and is capable of hot-swapping.

## Revendications

1. Ordinateur comprenant une pluralité de cartes enfichables, qui sont enfichables dans deux segments de bus voisins l'un de l'autre, dans lequel les deux segments de bus sont reliés par un circuit en pont, qui présente au moins une carte enfichable d'unité centrale, **caractérisé en ce que** deux éléments de pont (34, 38) sont prévus, lesquels comprennent chacun une unité d'entrée/sortie (24, 26) et une unité centrale (28, 30), qui sont reliées entre elles, dans lequel les éléments de pont sont enfichables dans les segments de bus (12, 14), et les unités d'entrée/sortie (24, 26) sont enfichables dans un segment de bus (12) et les unités centrales (28, 30) dans l'autre segment de bus (14), et dans lequel un routage en chevauchement des lignes de signalisation des segments de bus (12, 14) permet l'utilisation de connecteurs identiques en particulier sur toutes les positions et **en ce que** l'alimentation électrique interne de l'élément de pont (34, 38) n'est enclenchée que dans les cas où les deux unités de l'élément de pont (34, 38) sont complètement enfichées.

2. Ordinateur selon la revendication 1, **caractérisé en ce que** les deux segments de bus (12, 14) sont disposés sur une carte mère commune, qui est réalisée notamment dans une technique multicouche et **en ce que** les unités sont formées chacune sous la forme de cartes enfichables.

3. Ordinateur selon la revendication 2, **caractérisé en ce que**, à chaque fois, une unité d'entrée/sortie (24) et une unité centrale (28) associée sont reliées entre elles par un bus local (32) ou un circuit en pont, sachant qu'on doit veiller mécaniquement à ce l'enfichage de l'unité d'entrée/sortie (24) et de l'unité centrale (28) s'effectue de façon sensiblement synchrone.

4. Ordinateur selon l'une quelconque des revendications précédentes, **caractérisé en ce que** l'une des unités centrales (28, 30) est configurée comme hôte primaire du segment de bus (14) associé et l'une des unités d'entrée/sortie (24, 26) comme hôte primaire de l'autre segment de bus (12) et un système hautement disponible et tolérant aux erreurs est construit ainsi.

5. Ordinateur selon l'une quelconque des revendications précédentes, **caractérisé en ce que** l'unité centrale et l'unité d'entrée/sortie, qui représentent un élément de pont (34, 38), sont configurées toutes deux comme hôte actif ou hôte primaire du segment de bus (12, 14) respectivement relié, alors que l'autre élément de pont (38, 34) est configuré comme un non hôte, appelé aussi hôte secondaire.

6. Ordinateur selon l'une quelconque des revendications précédentes, **caractérisé en ce que** chaque segment de bus (12, 14) est construit comme bus CompactPCI et chaque unité d'entrée/sortie (24, 26) comme unité d'entrée/sortie est reliée par un circuit en pont (32, 36) à une unité centrale (28, 30), de sorte que l'élément de pont (34, 38) ainsi formé en tant qu'hôte ou non hôte peut commander chacun un segment de bus (12, 14) par l'interface standard.

7. Ordinateur selon l'une quelconque des revendications précédentes, **caractérisé en ce que** les éléments de pont (34, 38) sont formés permutables entre eux et identiques.

8. Ordinateur selon l'une quelconque des revendications précédentes, **caractérisé en ce que** les deux éléments de pont 34, 38) sont disposés sur le côté avant d'une carte mère ou d'un fond de panier présentant les deux segments de bus (12, 14).

9. Ordinateur selon l'une quelconque des revendications précédentes, **caractérisé en ce que** des puces de pont PCI-to-PCI connues sont utilisées pour les unités d'entrée/sortie (24, 26), dans lequel la fréquence de bus reste inchangée et en particulier n'est pas réduite.

10. Ordinateur selon l'une quelconque des revendications précédentes, **caractérisé en ce qu'**une liaison équivalente avec les deux segments de bus (12, 14) est garantie par l'architecture locale de l'unité centrale (28, 30).

11. Ordinateur selon l'une quelconque des revendications précédentes, **caractérisé en ce que**, dans un mode de fonctionnement particulier, chaque élément de pont (34, 38) travaille comme hôte chacun pour un segment de bus (12, 14), mode de fonctionnement à partir duquel l'ordinateur est réglable en particulier dans un mode de fonctionnement dans lequel un élément de pont travaille comme non hôte et est remplaçable à chaud.
